# FASCICULE DE BREVET EUROPEEN

(11) **EP 2 042 849 B1**
(45) Date de publication et mention de la délivrance du brevet: **21.12.2016**
(21) Numéro de dépôt: 08165204.2
(22) Date de dépôt: 26.09.2008
(51) Int. Cl.: G01M 3/20, G01L 21/12

(54) **Disposif et procédé pour la détection de fuites à haute pression par gaz traceur dans une pièce à tester**
Vorrichtung und Verfahren zur Erkennung von Hochdruck-Lecks in einem zu überprüfenden Werkstück mit Hilfe von Spürgas
Device and method for detecting high-pressure leaks using tracer gas in a part to be tested

(30) Priorité: 26.09.2007 FR 0757855
(43) Date de publication de la demande: 01.04.2009
(73) Titulaire: Pfeiffer Vacuum, 74000 Annecy (FR)
(72) Inventeur: Rouveyre, Frédéric, 74650, CHAVANOD (FR); Cuttaz, Paul, ANNECY, 74009 (FR); Larcher, Jean-Eric, 74009, ANNECY (FR)
(74) Mandataire: Croonenbroek, Thomas Jakob

(56) Documents cités:
- DE-C1- 19 535 832
- US-A- 5 561 240

## Description

La présente invention concerne un dispositif et un procédé permettant la détection de fuites par le contrôle de l'étanchéité d'une pièce exposée à un gaz de test. L'invention peut s'appliquer à tous types d'objets, mais plus spécialement à des objets creux dans lesquels il est aisé de faire le vide.

On connaît déjà des dispositifs permettant de détecter dans l'atmosphère intérieure d'une pièce à tester la présence d'un gaz de test provenant de l'atmosphère extérieure.

Les procédés les plus couramment utilisés se déroulent de la façon suivante : la pièce à tester est connectée à un dispositif de contrôle de l'étanchéité ; un vide est créé dans le couple pièce à tester/dispositif de contrôle de l'étanchéité ; on soumet la pièce à tester à un gaz de test présent dans l'atmosphère extérieure ; le défaut d'étanchéité est ensuite détecté par le dispositif de contrôle d'étanchéité qui recherche, dans son atmosphère intérieure, la présence du gaz de test.

De façon habituelle, les dispositifs de contrôle de l'étanchéité comprennent des moyens de pompage, un détecteur de gaz ainsi que des moyens de traitements de signal. Les moyens de pompage sont adaptés pour créer un vide adéquat permettant le fonctionnement idéal du détecteur de gaz. Ce détecteur de gaz émet un signal de mesure qui est traité par les moyens de traitement de signal pour fournir un signal de présence de fuites.

Les détecteurs de fuites classiques comportent souvent, comme détecteur de gaz, un analyseur de gaz avec un filament, par exemple un spectromètre de masse ou un quadripôle. Pour des raisons de durée de vie de ce filament, la pression dans la cellule d'analyse de l'analyseur de gaz doit être toujours inférieure à 10⁻³ à 10⁻⁴ mbar lors des mesures. On utilise donc une jauge de pression de gaz, qui mesure la pression totale dans la pièce à tester, et qui fournit un signal de pression que l'on compare à un seuil de pression à partir duquel on peut commander sans risque de dégradation le fonctionnement de l'analyseur de gaz. On utilise différents types de jauge de pression, par exemple une jauge de type Pirani ou thermocouple, et leur signal est toujours exploité directement, par simple comparaison avec un seuil de pression, pour commander la détection de gaz de fuites par un analyseur de gaz basse pression.

Il existe différentes méthodes de détection de fuites à l'aide d'un spectromètre de masse ou d'un quadripôle, par exemple une méthode de détection directe, et une méthode de détection en contre-flux.

La méthode de détection en mode direct consiste à connecter, à un instant donné, le détecteur de gaz directement à la pièce à tester. Cette méthode permet d'obtenir une mesure très sensible, mais elle est très lente car il faut attendre d'atteindre la pression de 10⁻³ à 10⁻⁴ mbar pour débuter la détection.

La méthode de détection en contre-flux consiste en l'analyse du gaz qui remonte à contre-flux des moyens de pompage secondaires jusqu'au détecteur de gaz basse pression. C'est cette méthode, ou bien une association de ces deux méthodes, qui est habituellement utilisée pour la détection de fuites dans une pièce à tester, car elle est plus rapide.

En effet, par la méthode de détection en contre-flux, le seuil de vide nécessaire dans le dispositif de contrôle de l'étanchéité pour effectuer les étapes de test de fuites est de façon habituelle de l'ordre de 10 à 20 mbar, qui est déjà un seuil beaucoup plus élevé que celui de la méthode en mode direct.

Le temps nécessaire pour atteindre un tel vide reste significatif et est d'environ 40 minutes pour une pièce de taille moyenne. Ce temps est perdu car l'opérateur effectuant l'opération de détection de fuites n'a pas d'autres opérations à effectuer pendant ce temps. Ainsi il apparaît nécessaire de diminuer ce "temps perdu".

De plus, dans le cas d'une fuite importante, l'opérateur ne peut ni détecter, ni localiser les fuites. En effet, les moyens de pompage ne permettent pas de descendre jusqu'à une pression suffisamment basse pour permettre au détecteur de gaz de fonctionner.

Les procédés de détection de fuites connus proposent plusieurs solutions permettant de débuter l'opération de détection de fuites alors que la pression dans la pièce à tester est encore élevée, et ceci tout en réalisant une pression basse appropriée dans l'analyseur de gaz.

On connaît un premier dispositif divulgué dans le document US-4,472,962. Ce dispositif comporte une pompe à vide turbomoléculaire ayant une admission reliée à un analyseur de gaz pour détecter la présence du gaz traceur. Un piquage intermédiaire dans la pompe à vide turbomoléculaire est relié à la pièce à tester. Le gaz de test, indicatif d'une fuite, va s'écouler à partir de la pièce à tester dans le piquage intermédiaire puis, à contre-flux de la direction de fonctionnement de la pompe à vide turbomoléculaire, jusque dans l'analyseur de gaz où le gaz de test est détecté. La mesure en contre-flux utilise le taux de compression élevé du piquage intermédiaire pour réaliser une mesure à une pression plus haute dans la pièce à tester.

Le document US-5,561,240 divulgue un détecteur de fuites ayant une pompe turbomoléculaire multiétagée comportant une pluralité de piquages intermédiaires, chacun de ces piquages ayant une position correspondant à un taux de compression différent de la pompe turbomoléculaire. Une vanne est disposée sur chacun des piquages. Une mesure de vide est réalisée dans la conduite connectée à la pièce à tester et en communication avec chacune des vannes par l'intermédiaire d'un contrôleur, de sorte que les vannes sont séquentiellement ouvertes et fermées par un signal du contrôleur selon un changement de pression détecté par la mesure de vide.

Un autre dispositif divulgué dans le document US-5,585,548 propose de conserver une différence de pression entre la cellule d'analyse de l'analyseur de gaz et la conduite d'aspiration, en disposant une restriction sur le piquage intermédiaire du détecteur de fuites en contre-flux.

D'autres procédés suggèrent de placer des membranes ou quartz dans le système de pompage pour pomper de façon sélective le gaz de test tel que l'hélium et pour le diriger vers l'analyseur de gaz, ce qui lui permet de conserver une pression totale basse tout en recevant une plus grande concentration d'hélium.

Le document EP-0 352 371 divulgue un détecteur contenant une pompe ionique connectée à une sonde formée d'un tube capillaire en verre. Pour empêcher une grande quantité d'air de passer dans l'analyseur de gaz tout en pompant préférentiellement le gaz de test tel que l'hélium, des moyens de chauffage du tube de verre sont asservis à un dispositif de commande qui les neutralise dès que le courant de la pompe excède un seuil prédéterminé. Ceci entraîne un refroidissement du tube et une diminution substantielle de sa perméabilité à l'hélium.

On connaît également le détecteur divulgué dans le document US-5,325,708 utilisant une membrane capillaire de quartz chauffée par un filament. En présence d'hélium, la température du capillaire doit être réduite pour empêcher la saturation de la chambre de prélèvement.

Le document US 5,661,229 divulgue un détecteur de fuites avec une fenêtre en polymère ou en quartz chauffé, pour laisser passer sélectivement l'hélium de façon à ce que, lorsqu'une quantité suffisante d'hélium est passée pour la formation d'un signal de mesure, le réchauffeur est alors coupé. Ainsi il est possible d'éviter l'entrée de trop d'air dans le système de détection.

Le document DE 195 35 832 divulgue un dispositif de détection de fuite utilisant une jauge Pirani pour mesurer directement une fuite en détectant un changement de la valeur de pression mesurée dû à un apport d'hélium. Afin de lever l'ambiguïté existante entre les variations du signal délivré par la jauge Pirani dues aux variations de concentration d'hélium et celles dues aux variations de pression, on associe en parallèle de la jauge Pirani un détecteur piézoélectrique. Un microprocesseur compare les signaux de pression mesurés par les deux détecteurs et donne une valeur de concentration d'hélium ou un taux de fuite. Ce document mentionne la possibilité d'utiliser cette solution dans un dispositif de détection comprenant une pompe multiétagée, en connectant le système de mesure à deux capteurs Pirani/piézo à un étage haute pression ou même en sortie de la pompe multiétagée où règne la pression atmosphérique.

Le document JP05118949 divulgue un dispositif de détection de fuite comprenant une pompe ordinaire et une jauge de Pirani, dans lequel on détermine la taille d'une fuite en fonction de la valeur des variations du signal délivré par la jauge de Pirani.

Tous ces détecteurs connus permettent en principe d'augmenter le seuil de pression à partir duquel on peut commencer à détecter des fuites. Cependant le seuil de pression qu'il faut atteindre avant d'effectuer une mesure de détection de fuites reste trop bas.

De plus, les dispositifs évoqués sont onéreux et sensibles aux contaminants présents dans l'atmosphère. Cette sensibilité aux contaminants rend la sensibilité de la mesure nettement moins bonne.

Le problème posé par la présente demande est de pouvoir assurer une détection des fuites dans une pièce à tester exposée à un gaz de test dès que la pression dans la pièce à tester descend au-dessous d'un seuil qui est lui-même nettement supérieur à 20 mbar, par exemple d'environ 50 à 200 mbar, pouvant même être de l'ordre de la pression atmosphérique.

L'invention vise à réaliser cela avec des moyens peu onéreux, c'est-à-dire en évitant le recours à des structures supplémentaires onéreuses.

Pour atteindre ces buts ainsi que d'autres, l'invention propose un dispositif de détection de fuites, comprenant :
- un système de pompage primaire, adapté pour refouler à la pression atmosphérique, et ayant une entrée d'aspiration primaire,
- une conduite principale, ayant une entrée de connexion adaptée pour être connectée à une pièce à tester, et ayant une sortie de connexion connectée à l'entrée d'aspiration du système de pompage primaire,
- une pompe secondaire, multiétagée, ayant une aspiration principale, ayant un refoulement relié à l'entrée d'aspiration primaire, et ayant au moins une aspiration intermédiaire reliée à la conduite principale par une conduite intermédiaire,
- un analyseur de gaz, relié à l'aspiration principale de la pompe secondaire multiétagée, pour détecter la présence d'un gaz de fuite remontant la pompe secondaire multiétagée en contre-flux,
- une jauge de pression de gaz, sensible aux coefficients d'échange thermique des gaz, connectée à la conduite principale, et produisant un signal de mesure de pression,
- des moyens de traitement de signal et de commande, recevant le signal de mesure de pression délivré par la jauge de pression de gaz, contenant un programme enregistré, et aptes à comparer le signal de mesure de pression à un seuil de pression déterminé pour générer un signal de mise en connexion de l'analyseur de gaz lorsque la pression mesurée est inférieure audit seuil de pression.

Selon l'invention, les moyens de traitement de signal et de commande sont en outre aptes à réaliser une séquence initiale de détection de fuite à haute pression, mettant en oeuvre le système de pompage primaire et la jauge de pression de gaz, et au cours de laquelle les moyens de traitement de signal et de commande analysent le signal de mesure de pression et sont aptes à produire un signal de présence de fuites en cas de présence d'un pic dans l'évolution du signal de mesure de pression délivré par la jauge de pression de gaz.

Le programme enregistré peut contenir une séquence initiale de détection de fuite à haute pression, mettant en oeuvre le système de pompage primaire et la jauge de pression de gaz, pour générer un signal de présence de fuites en cas de variation brusque du signal de mesure de pression délivré par la jauge de pression de gaz. En l'absence d'une détection de fuites lors de la séquence initiale, le programme enregistré peut poursuivre la détection par une séquence ultérieure de détection de fuites, pendant laquelle la pompe secondaire multiétagée poursuit l'établissement du vide dans la pièce à tester, et pendant laquelle la recherche des fuites est assurée par l'analyseur de gaz

L'invention utilise le fait qu'un gaz de test peut présenter un coefficient d'échange thermique différent de celui des autres gaz présents dans la pièce à tester. La pénétration de gaz de test dans la pièce à tester, à cause d'une fuite, modifie alors le coefficient d'échange thermique du mélange gazeux présent dans la pièce, et malgré le maintien d'une pression totale sensiblement constante ou lentement variable déterminée par les moyens de pompage, la jauge de pression procure un signal de sortie rapidement variable qui résulte de cette modification de coefficient d'échange thermique auquel elle est sensible. Cette variation rapide est l'indice de présence d'une fuite, et est décelée par les moyens de traitement du signal.

Selon un mode de réalisation de l'invention, la jauge de pression de gaz peut être telle que celles habituellement utilisées pour mesurer la pression gazeuse dans la pièce à tester et pour commander le fonctionnement d'un analyseur de gaz dès qu'un seuil de vide satisfaisant est atteint, par exemple une jauge de type Pirani ou thermocouple. Toutefois, l'invention utilise de manière nouvelle le signal produit par une telle jauge de pression lorsque celle-ci est sensible aux coefficients d'échange thermique des gaz, en traitant ce signal de façon appropriée. Ainsi, la jauge de pression de gaz, associée aux moyens de traitement de signal, constitue elle-même un moyen de détection de fuites à haute pression, sans intervention d'un analyseur de gaz basse pression.

Ce dispositif permet de détecter les fuites de façon fiable sans avoir besoin de baisser la pression en dessous d'environ 50 à 200 mbar. En effet, avec une telle pression d'environ 50 à 200 mbar dans la conduite principale, dix fois supérieure à celle à laquelle il faut descendre avec les dispositifs connus jusqu'alors pour commencer à détecter les fuites, les fuites peuvent être détectées de façon fiable et plus rapide.

Différentes méthodes de traitement de signal peuvent être utilisées par les moyens de traitement de signal.

Une première méthode consiste à analyser en continu la dérivée du signal de mesure de pression délivré par la jauge de pression de gaz ; par exemple on analyse en continu le signe de la dérivée du signal filtré de mesure de pression délivré par la jauge de pression de gaz et on émet un signal de présence de fuites si ce signe s'inverse. Le filtrage du signal de mesure de pression, et la sensibilité de détection du signe de la dérivée, sont choisis pour garantir que l'utilisateur ne soit pas alerté pour de petites variations dues aux bruits du système et non aux fuites.

Une seconde méthode consiste à comparer le signal de mesure de pression délivré par la jauge de pression de gaz avec des courbes d'étalonnage préalablement enregistrées dans un moyen de stockage, et à émettre un signal de présence de fuites si le signal de mesure de pression diffère de manière significative des courbes d'étalonnage.

Chacune des méthodes exposées est simple, rapide, efficace et fiable.

Le dispositif de détection de fuites comprend une pompe secondaire, multiétagée, ayant une aspiration principale, ayant un refoulement relié à l'entrée d'aspiration primaire, et ayant au moins une aspiration intermédiaire reliée à la conduite principale par une conduite intermédiaire, un analyseur de gaz, relié à l'aspiration principale de la pompe secondaire multiétagée, pour détecter la présence d'un gaz de fuite remontant la pompe secondaire multiétagée en contre-flux.

De préférence la pompe secondaire multiétagée est une pompe turbomoléculaire.

En combinant un tel analyseur de gaz à haute sensibilité, permettant la détection de fuites à basse pression, avec la jauge de pression de gaz qui permet la détection de fuites à plus haute pression, on détecte plus rapidement les grosses fuites (dès le début de la descente en pression) et on peut, avec le même dispositif, détecter les petites fuites (à basse pression).

L'analyseur de gaz peut être un spectromètre de masse ou un quadripôle. De préférence, avec un tel analyseur de gaz à faible pression, les moyens de traitement de signal peuvent comparer le signal de mesure de pression à un seuil de pression déterminé, et peuvent générer un signal de mise en connexion de l'analyseur de gaz lorsque la pression mesurée est inférieure audit seuil de pression.

Ainsi, la jauge de pression remplit, avec les moyens de traitement de signal, une première fonction de détecteur de fuites pour la détection de fuites à haute pression, et une seconde fonction de commande de l'analyseur de gaz pour la détection de fuites à basse pression.

Le dispositif de détection de fuites peut comporter en outre au moins un capteur de présence de gaz de fuite, connecté à la conduite principale, apte à détecter le gaz de fuite à une pression proche de la pression atmosphérique, et produisant un signal de présence de gaz envoyé aux moyens de traitement de signal.

Un tel dispositif permet de détecter les fuites de façon fiable sans avoir besoin de baisser la pression en dessous d'environ la pression atmosphérique, soit environ 1000 mbar. On peut détecter plus tôt les fuites pour un même volume. On détecte plus tôt les fuites sur les pièces comportant de grosses fuites.

Le capteur de présence de gaz de fuite peut par exemple être un détecteur d'hydrogène de référence "H2000" commercialisé par la société Alcatel-Lucent.

Le dispositif de détection de fuites peut comprendre en outre une conduite d'entrée directe munie d'un moyen de contrôle de flux d'entrée et apte à connecter la pièce à tester à l'accès d'aspiration secondaire de la pompe secondaire multiétagée ou à l'analyseur de gaz de test.

Selon un autre aspect, l'invention propose un procédé de détection de fuites dans une pièce à tester dans lequel :
- on met l'atmosphère intérieure d'une pièce à tester en dépression vis-à-vis de l'atmosphère extérieure, et on surveille le coefficient d'échange thermique du mélange gazeux présent dans ladite atmosphère intérieure de la pièce à tester,
- on asperge à un instant donné l'extérieur de la pièce à tester avec un gaz de test,
- on recherche la présence d'une variation brusque significative du coefficient d'échange thermique du mélange gazeux peu après l'instant d'aspersion, cette présence étant le signe de l'existence d'une fuite,
- en l'absence d'une détection de fuite, on poursuit l'établissement du vide dans la pièce à tester et on réalise une détection de fuites en contre-flux par un analyseur de gaz.

De préférence, le gaz de test est choisi parmi l'hélium, l'hydrogène, le néon et l'argon.

Ce procédé permet de façon simple, fiable, efficace et rapide de détecter la présence de fuites dans une pièce à tester, grâce à un dispositif peu encombrant et peu onéreux, à partir d'une pression d'environ 200 mbar dans le dispositif de détection de fuites.

D'autres objets, caractéristiques et avantages de la présente invention ressortiront de la description suivante de modes de réalisation particuliers, faite en relation avec les figures jointes, parmi lesquelles :
- la figure 1 illustre schématiquement une réalisation pratique d'un dispositif de détection de fuites selon un premier mode de réalisation de la présente invention ;
- la figure 2 est une représentation graphique des signaux de mesure de pression en présence et en absence de fuites pour un dispositif selon l'invention, le temps T en minutes est représenté en abscisse et la pression P en mbar en ordonnée;
- la figure 3 illustre schématiquement une réalisation pratique d'un dispositif de détection de fuites dans un second mode de réalisation de la présente invention ;
- la figure 4 est une représentation graphique de la descente en pression lors de la détection de fuites avec un dispositif de détection de fuites selon un mode de réalisation de la présente invention, le temps T en minutes est représenté en abscisse et la pression P en mbar en ordonnée ; et
- la figure 5 illustre schématiquement une réalisation pratique d'un dispositif de détection de fuites dans un troisième mode de réalisation de l'invention.

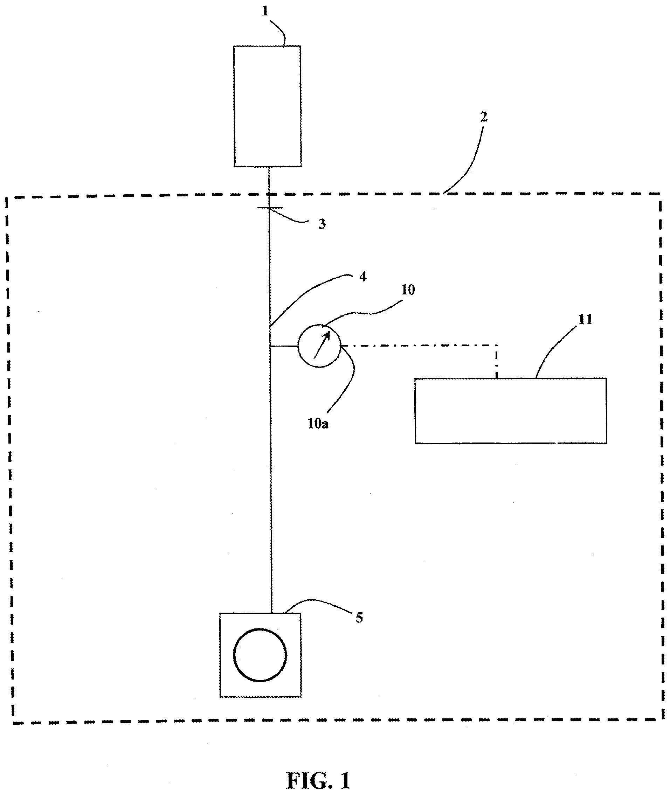

Dans le mode de réalisation illustré sur la figure 1, le dispositif de détection de fuites 2 selon l'invention est utilisé pour détecter les fuites d'une pièce à tester 1.

Une pompe primaire 5 est connectée à la pièce à tester 1 par un moyen de connexion 3 et par une conduite principale 4. Cette pompe primaire 5 refoule à la pression atmosphérique. De façon avantageuse, cette pompe primaire 5 peut être une pompe sèche à membrane, pompe habituellement utilisée dans les laboratoires.

Une jauge de pression de gaz 10 est connectée à la conduite principale 4, et produit un signal de mesure de pression sur sa sortie 10a.

Des moyens de traitement du signal 11 sont connectés à la sortie 10a de la jauge de pression de gaz 10, et sont adaptés pour analyser le signal de mesure de pression et pour produire, le cas échéant, un signal de présence de fuites.

Selon l'invention, on choisit une jauge de pression de gaz 10 sensible aux coefficients d'échange thermique des gaz, par exemple une jauge de pression de gaz 10 de type Pirani. On sait que les jauges de pression de gaz de type Pirani fournissent un signal de mesure de pression qui varie en fonction de la nature des gaz présents dans le volume à caractériser.

Dans une jauge de pression de gaz 10 de type Pirani, la perte de chaleur d'un filament exposé à une pression basse est généralement mesurée électriquement par un pont de Wheatstone, qui sert à chauffer le fil résistant et à mesurer sa résistance. La tension du pont de Wheatstone est maintenue constante. Un changement de pression gazeuse autour du fil résistant fait varier la température du fil résistant exposé à la pression basse, change sa résistance, et déséquilibre le pont de Wheatstone. Un microampèremètre calibré en unité de mesure de pression convertit ce déséquilibre en un signal de mesure de pression. La gamme des pressions pouvant être mesurées va généralement de 10⁻² mbar à 100 mbar, mais certaines jauges Pirani spéciales ont une gamme plus étendue jusqu'à au moins 200 mbar. Un avantage d'utiliser une jauge Pirani est que la courbe de réponse du courant du pont est quasi linéaire en fonction de la pression en air.

Selon un autre mode de réalisation, la jauge de pression de gaz 10 est de type thermocouple.

Cette jauge de pression de gaz établit alors le bilan d'échange thermique entre un conducteur chaud et la paroi froide extérieure, en fonction de la pression, par mesure directe de la température du conducteur chaud avec un thermocouple.

De façon encore plus avantageuse, on peut utiliser des versions de jauges Pirani ou de thermocouple optimisées pour inclure les phénomènes de convection qui existent à haute pression.

En pratique, pour la détection de fuites d'une pièce à tester, on asperge la pièce à tester 1 d'un gaz de test, qui est avantageusement de l'hélium, de l'hydrogène ou dans une moindre mesure du néon ou de l'argon. La pompe primaire 5 met en dépression l'atmosphère intérieure de la pièce à tester 1 et du dispositif de détection de fuites 2 (conduite principale 4 et jauge de pression de gaz 10) par rapport à l'atmosphère extérieure. Ainsi, en cas de fuites, le gaz de test pénètre dans l'atmosphère intérieure du dispositif de détection de fuites 2, et se propage vers la jauge de pression de gaz 10 et vers la pompe primaire 5. Les moyens de traitement du signal 11 détectent alors les variations du signal de mesure de pression fourni par la jauge de pression de gaz 10.

En utilisant le fait que le signal de mesure de pression d'une jauge de pression de gaz 10, sensible aux coefficients d'échange thermique, varie en fonction de la nature des gaz présents dans l'atmosphère à tester, et en étudiant le signal de mesure de pression, on détecte la présence de fuites.

Le signal de mesure de pression produit par la jauge varie de façon significative et immédiate en cas de fuites, bien que la variation de pression totale reste monotone.

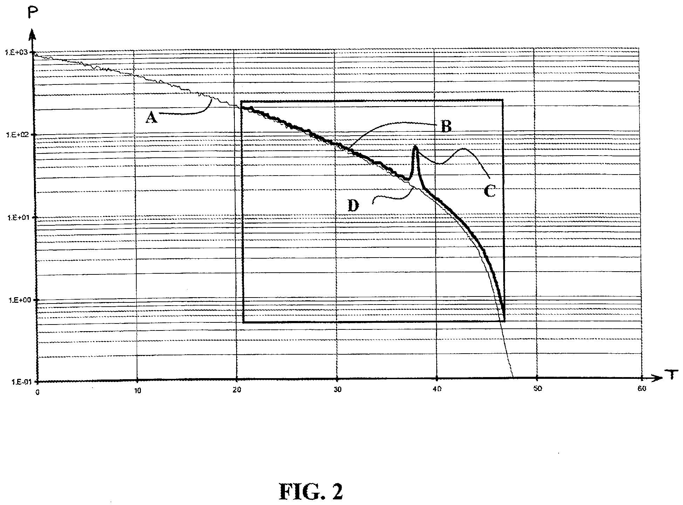

La figure 2 illustre le signal fourni par la jauge de mesure de pression 10 lors d'une séquence de pompage. Dans un premier temps, le signal de mesure de la pression P est décroissant monotone, car la pompe primaire 5 fait le vide dans le dispositif de détection de fuites 2 et dans la pièce à tester 1.

La courbe A illustre un signal de mesure de pression, fourni par la jauge de pression de gaz 10, dans le cas où la pièce à tester 1 ne présente pas de fuites. Le signal de mesure de pression est monotone décroissant.

La courbe B illustre le signal de mesure de pression dans le cas où la pièce à tester présente au moins une fuite. On remarque que la courbe B présente un pic C qui résulte du fait que, suite à l'aspersion de la surface externe de la pièce à tester par un gaz de test, du gaz de test a pénétré par une fuite à l'intérieur de la pièce à tester et a modifié le mélange gazeux à l'intérieur du couple pièce à tester 1 / dispositif de détection de fuites 2. La jauge de mesure de pression 10 a alors réagi à une brusque variation du coefficient d'échange thermique du mélange gazeux dans l'atmosphère intérieure du dispositif de détection de fuites 2. Le pic C peut ainsi être interprété comme un signal de présence de fuites.

Il est à noter que le pic dû à la brusque variation du coefficient d'échange thermique du mélange gazeux dépend du gaz de test utilisé. Par exemple, ce pic est positif si le gaz de test est de l'hélium, il sera négatif pour de l'argon.

On remarque que le pic C du signal de mesure de pression de la courbe B a une valeur de 65 mbar, et que l'ordonnée du point D correspondant de la courbe A est de 20 mbar.

En utilisant comme indiqué ci-dessus une jauge Pirani ayant une gamme de fonctionnement jusqu'à au moins 200 mbar, on peut accélérer sensiblement la détection de fuite. En effet, pour un même volume, le temps nécessaire pour atteindre 200 mbar (au lieu de 10-20 mbar) est de 20 minutes au lieu de 40 minutes. Le "temps perdu" est alors diminué de moitié.

On a vu que plusieurs méthodes de traitement de signal pouvaient être utilisées, notamment l'analyse du signe de la dérivée du signal de mesure de pression.

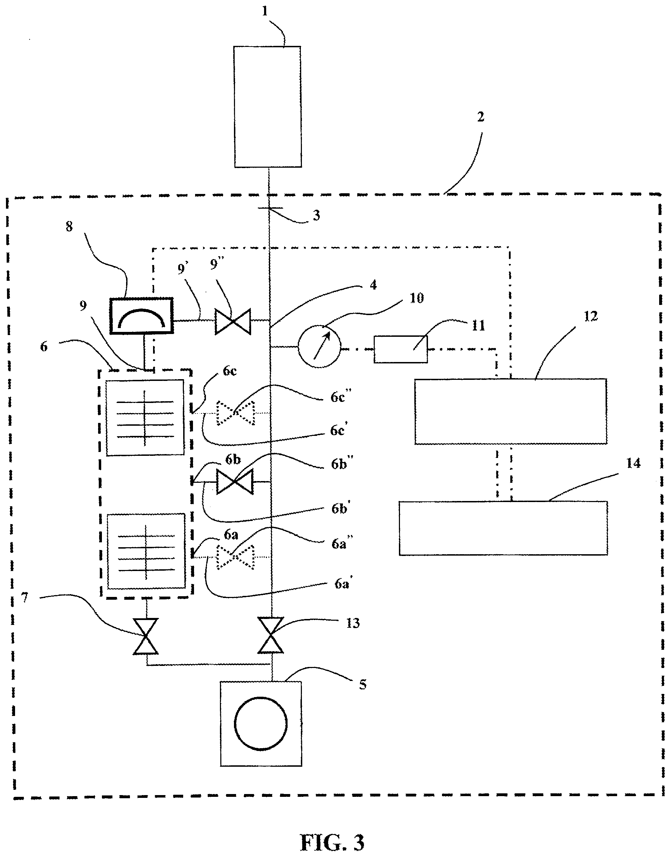

La figure 3 illustre un second mode de réalisation du dispositif selon l'invention, qui comprend en outre :
- une pompe secondaire 6, multiétagée, ayant une aspiration principale 9, ayant un refoulement relié à l'entrée d'aspiration primaire, et ayant au moins une aspiration intermédiaire reliée à la conduite principale 4 par une conduite intermédiaire 6b',
- un analyseur de gaz 8, relié à l'aspiration principale 9 de la pompe secondaire multiétagée 6, pour détecter la présence d'un gaz de fuite remontant la pompe secondaire multiétagée 6 en contre-flux.

Une pompe primaire 5 est connectée à une pièce à tester 1 par un moyen de connexion 3 et par une conduite principale 4 munie d'un moyen de contrôle de flux primaire 13. Cette pompe primaire 5 refoule à la pression atmosphérique.

Une jauge de pression de gaz 10, de type Pirani ou thermocouple par exemple, est directement reliée à la conduite principale 4 et mesure la pression dans la conduite principale 4. Cette jauge de pression de gaz 10 est reliée à des moyens de traitement du signal 11 selon l'invention.

La pompe secondaire multiétagée 6 refoule à l'entrée d'aspiration de la pompe primaire 5 par l'intermédiaire d'un moyen de contrôle de flux secondaire 7.

Cette pompe secondaire multiétagée 6 est avantageusement une pompe moléculaire, turbomoléculaire ou hybride, de façon à assurer un vide adéquat pour permettre l'utilisation d'un analyseur de gaz 8 de type basse pression à grande sensibilité. Ce type de pompe multiétagée augmente avantageusement les possibilités d'adaptation à des volumes différents d'objets, par l'augmentation du débit de pompage.

La pompe secondaire multiétagée 6 peut posséder au moins deux accès intermédiaires, tels que par exemple les accès 6b et 6c illustrés sur la figure 3.

Dans le mode de réalisation illustré sur la figure 3, la pompe secondaire multiétagée 6 possède trois accès intermédiaires 6a, 6b, 6c associés à trois conduites intermédiaires 6a', 6b', 6c' et à trois moyens de contrôle de flux intermédiaires 6a", 6b", 6c". Ces conduites intermédiaires 6a', 6b', 6c' relient la pompe secondaire multiétagée 6 à la conduite principale 4.

L'analyseur de gaz 8 est avantageusement un analyseur de gaz à filament, qui peut avantageusement être un spectromètre de masse, un quadripôle ou autre. Ce type de détecteur de gaz permet de réaliser une mesure avec une très grande sensibilité. La pression de fonctionnement adéquate dans le détecteur de gaz 8 est d'environ de 10⁻³ à 10⁻⁴ mbar pour que le filament ne soit pas endommagé.

Dans le mode de réalisation illustré, on prévoit également que le dispositif de contrôle de fuites 2 comprend en outre une conduite d'entrée directe 9' munie d'un moyen de contrôle de flux d'entrée 9" et apte à connecter l'objet 1 à l'accès d'aspiration secondaire 9 de la pompe secondaire multiétagée 6 ou à l'analyseur de gaz de test 8.

Le dispositif de contrôle de fuites 2 comprend des moyens de commande électroniques 12, comportant par exemple un processeur associé à une mémoire contenant un programme enregistré. Les moyens de commande 12 reçoivent les signaux de pression générés par la jauge de pression de gaz 10 apte à mesurer la pression gazeuse dans la conduite principale 4. Les moyens de commande 12 sont couplés à un système d'affichage 14 pour afficher le résultat des tests de fuites.

Les moyens de contrôle de flux 6a", 6b", 6c", 7, 9" et 13, qui sont par exemple des électrovannes d'isolement de type tout ou rien, sont tous pilotés par les moyens de commande électroniques 12. Les moyens de contrôle de flux 6a", 6b", 6c", 7, 9" et 13 peuvent être chacun ouverts ou fermés avec une grande rapidité, selon un programme enregistré déterminé.

Le programme enregistré commande l'ouverture et la fermeture des moyens de contrôle de flux 6a", 6b", 6c", 7, 9" et 13 en fonction de la pression P mesurée par la jauge de pression de gaz 10. Les opérations d'ouverture ou de fermeture des divers moyens de contrôle de flux 6a", 6b", 6c", 7, 9" et 13 s'effectuent lorsque les moyens de commande électroniques 12 constatent que la pression P atteint l'un de plusieurs seuils de pression prédéterminés et fonction du dispositif de détection de fuites 2.

Le programme enregistré contient une séquence initiale de détection de fuite à haute pression, effectuée pendant le prévidage de la pièce à tester 1, et mettant en oeuvre la pompe primaire 5, la jauge de pression de gaz 10 et le système de pilotage et de mesure 11. Cette séquence est par exemple identique à la procédure de détection de fuites décrite précédemment en relation avec la figure 1.

En l'absence d'une détection de fuites lors de la séquence initiale, le programme enregistré poursuit la détection par une séquence ultérieure de détection de fuites pendant laquelle la pompe secondaire multiétagée 6 poursuit l'établissement du vide dans la pièce à tester 1, et pendant laquelle le gaz de test remonte en contre-flux dans l'analyseur de gaz 8, pour une détection de fuites en contre-flux.

Le procédé selon l'invention, ainsi complété, permet d'effectuer dans un premier temps et de façon rapide une détection de grosses fuites par la jauge de pression de gaz 10, et de poursuivre dans un deuxième temps la recherche des petites fuites par l'analyseur de gaz 8.

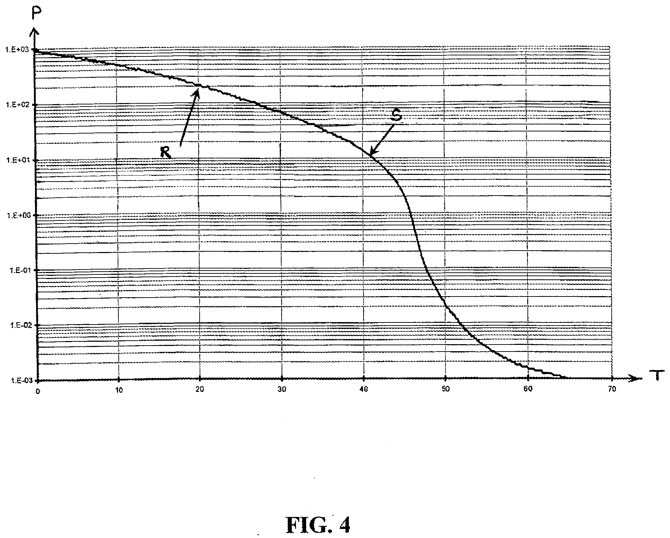

La figure 4 illustre une descente en pression montrant le gain de temps lorsqu'on peut détecter des fuites à 200 mbar au moyen du dispositif selon l'invention (point R), au lieu de 10 à 20 mbar avec un dispositif de l'art antérieur (point S), pour une pièce à tester d'un même volume.

Dans l'exemple illustré, on remarque qu'une attente de 40 minutes est nécessaire avant de pouvoir passer en mode de détection de fuites avec un analyseur de gaz en contre-flux de l'art antérieur, alors qu'une attente de seulement 20 minutes, soit deux fois moins de temps, est nécessaire avant de pouvoir passer en mode de détection de fuites avec un détecteur de fuites selon l'invention.

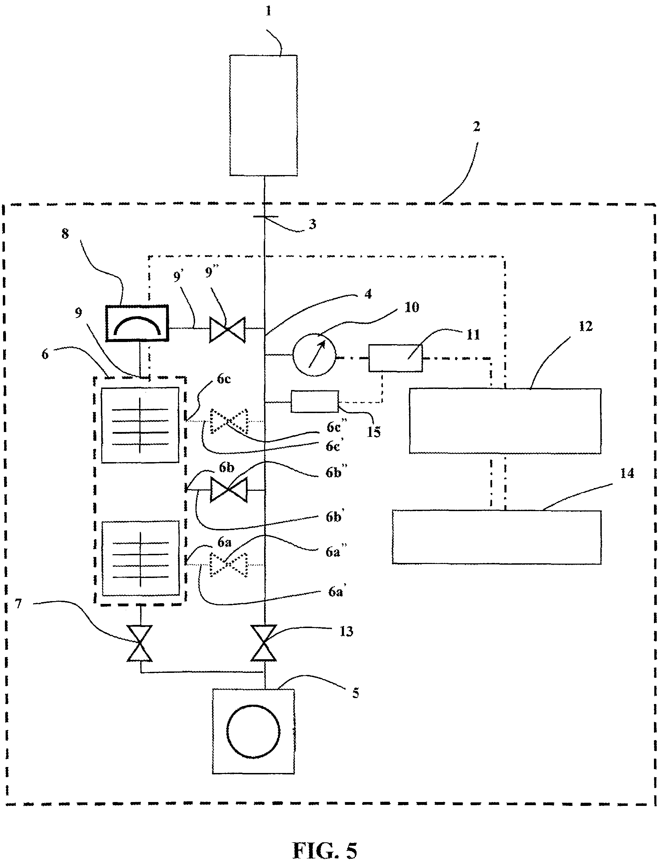

La figure 5 illustre un troisième mode de réalisation du dispositif de l'invention, qui comprend en outre au moins un capteur de présence de gaz de fuite 15 à haute pression (proche de la pression atmosphérique), connecté à la conduite principale 4.

Le procédé selon l'invention, ainsi complété, permet d'effectuer de façon encore plus rapide une détection de très grosses fuites par le capteur de présence de gaz de fuite 15, de poursuivre ensuite la détection de grosses fuites par la jauge de pression de gaz 10, et de poursuivre enfin par la recherche des petites fuites par l'analyseur de gaz 8.

Comme capteur de présence de gaz de fuite à haute pression on peut utiliser un capteur sensible à l'hydrogène de référence "H2000" commercialisé par la société Alcatel-Lucent.

Le gaz de fuite peut être un mélange de 5% d'hydrogène et 95% d'hélium.

En alternative, on peut utiliser l'hydrogène seul et régler l'analyseur de gaz 8 sur le gaz hydrogène. Dans ce dernier cas, on réalise un détecteur hydrogène à gamme étendue.

## Revendications

1. Dispositif de détection de fuites (2), comprenant :
- un système de pompage primaire (5), adapté pour refouler à la pression atmosphérique, et ayant une entrée d'aspiration primaire,
- une conduite principale (4), ayant une entrée de connexion adaptée pour être connectée à une pièce à tester (1), et ayant une sortie de connexion connectée à l'entrée d'aspiration du système de pompage primaire (5),
- une pompe secondaire (6), multiétagée, ayant une aspiration principale, ayant un refoulement relié à l'entrée d'aspiration primaire, et ayant au moins une aspiration intermédiaire reliée à la conduite principale (4) par une conduite intermédiaire (6b),
- un analyseur de gaz (8), relié à l'aspiration principale de la pompe secondaire multiétagée (6), pour détecter la présence d'un gaz de fuite remontant la pompe secondaire multiétagée (6) en contre-flux.
- une jauge de pression de gaz (10), sensible aux coefficients d'échange thermique des gaz, connectée à la conduite principale (4), et produisant un signal de mesure de pression,
- des moyens de traitement de signal et de commande (11, 12), recevant le signal de mesure de pression délivré par la jauge de pression de gaz (10), contenant un programme enregistré, et aptes à comparer le signal de mesure de pression à un seuil de pression déterminé pour générer un signal de mise en connexion de l'analyseur de gaz (8) lorsque la pression mesurée est inférieure audit seuil de pression,
**caractérisé en ce que** les moyens de traitement de signal et de commande (11, 12) sont en outre aptes à réaliser une séquence initiale de détection de fuite à haute pression, mettant en oeuvre le système de pompage primaire (5) et la jauge de pression de gaz (10), et au cours de laquelle les moyens de traitement de signal et de commande (11, 12) analysent le signal de mesure de pression et sont aptes à produire un signal de présence de fuites en cas de présence d'un pic (C) dans l'évolution du signal, de mesure de pression délivré par la jauge de pression de gaz (10), résultant d'une modification du coefficient thermique du mélange de gaz présent dans la pièce à tester.

2. Dispositif de détection de fuites selon la revendication 1, dans lequel
- le programme enregistré contient une séquence initiale de détection de fuite à haute pression, mettant en oeuvre le système de pompage primaire (5) et la jauge de pression de gaz (10), pour générer un signal de présence de fuites en cas de variation brusque du signal de mesure de pression délivré par la jauge de pression de gaz (10),
- en l'absence d'une détection de fuites lors de la séquence initiale, le programme enregistré poursuit la détection par une séquence ultérieure de détection de fuites, pendant laquelle la pompe secondaire multiétagée (6) poursuit l'établissement du vide dans la pièce à tester (1), et pendant laquelle la recherche des fuites est assurée par l'analyseur de gaz (8).

3. Dispositif de détection de fuites selon l'une des revendications 1 ou 2, dans lequel les moyens de traitement de signal (11) analysent en continu la dérivée du signal de mesure de pression délivré par la jauge de pression de gaz (10).

4. Dispositif de détection de fuites selon la revendication 3, dans lequel les moyens de traitement de signal (11) analysent en continu le signe de la dérivée du signal filtré dé mesure de pression délivré par la jauge de pression de gaz (10) et émettent un signal de présence de fuites si ce signe s'inverse.

5. Dispositif de détection de fuites selon l'une des revendications 1 ou 2, dans lequel les moyens de traitement de signal (11) comparent le signal de mesure de pression délivré par la jauge de pression de gaz (10) avec des courbes d'étalonnage préalablement enregistrées dans un moyen de stockage et émettent un signal de présence de fuites si le signal de mesure de pression diffère de manière significative des courbes d'étalonnage.

6. Dispositif de détection de fuites selon l'une quelconque des revendications 1 à 5, dans lequel l'analyseur de gaz (8) est un spectromètre de masse ou un quadripôle.

7. Dispositif de détection de fuites selon l'une des revendications précédentes, comportant en outre au moins un capteur de présence de gaz de fuite (15), connecté a la conduite principale (4), apte à détecter le gaz de fuite à une pression, proche de la pression atmosphérique, et produisant un signal de présence de gaz envoyé aux moyens de traitement de signal (11).

8. Dispositif de détection de fuites selon l'une des revendications précédentes, comprenant en outre une conduite d'entrée directe (9') munie d'un moyen de contrôle de flux d'entrée (9") et apte à connecter la pièce à tester (1) à l'accès d'aspiration secondaire (9) de la pompe secondaire multiétagée (6) ou à l'analyseur de gaz de test (8).

9. Procédé de détection de fuites dans une pièce à tester (1), dans lequel :
- on met l'atmosphère intérieure d'une pièce à tester (1) en dépression vis-à-vis de l'atmosphère extérieure, et on surveille le coefficient d'échange thermique du mélange gazeux présent dans ladite atmosphère intérieure de la pièce à tester (1),
- on asperge à un instant donné l'extérieur de la pièce à tester (1) avec un gaz de test,
- on recherche la présence d'une variation brusque significative du coefficient d'échange thermique du mélange gazeux peu après l'instant d'aspersion, cette présence étant le signe de l'existence d'une fuite,
- en l'absence d'une détection de fuite, on poursuit l'établissement du vide dans la pièce à tester (1) et on réalise une détection de fuites en contre-flux par un analyseur de gaz (8).

## Patentansprüche

1. Leckerfassungsvorrichtung (2), die enthält:
- ein Primärpumpsystem (5), das geeignet ist, bei Atmosphärendruck zu fördern, und das einen Primärsaugeingang hat,
- eine Hauptleitung (4), die einen Verbindungseingang hat, der geeignet ist, mit einem zu testenden Bauteil (1) verbunden zu werden, und einen Verbindungsausgang hat, der mit dem Saugeingang des Primärpumpsystems (5) verbunden ist,
- eine mehrstufige Sekundärpumpe (6), die eine Hauptsaugseite hat, die eine mit dem Primärsaugeingang verbundene Druckseite hat, und die mindestens eine Zwischensaugseite hat, die mit der Hauptleitung (4) über eine Zwischenleitung (6b) verbunden ist,
- einen Gasanalysator (8), der mit der Hauptsaugseite der mehrstufigen Sekundärpumpe (6) verbunden ist, um das Vorhandensein eines Leckgases zu erfassen, das die mehrstufige Sekundärpumpe (6) im Gegenstrom hochsteigt,
- einen Gasdruckmesser (10), der für die Wärmetauschkoeffizienten der Gase empfindlich ist, verbunden mit der Hauptleitung (4), und der ein Druckmesssignal erzeugt,
- Signalverarbeitungs- und Steuereinrichtungen (11, 12), die das vom Gasdruckmesser (10) gelieferte Druckmesssignal empfangen, die ein gespeichertes Programm enthalten und fähig sind, das Druckmesssignal mit einer bestimmten Druckschwelle zu vergleichen, um ein Signal zur Verbindung des Gasanalysators (8) zu erzeugen, wenn der gemessene Druck niedriger als die Druckschwelle ist,
**dadurch gekennzeichnet, dass** die Signalverarbeitungs- und Steuereinrichtungen (11, 12) außerdem fähig sind, eine Anfangsfolge der Leckerfassung bei Hochdruck durchzuführen, die das Primärpumpsystem (5) und den Gasdruckmesser (10) verwendet, und während der die Signalverarbeitungs- und Steuereinrichtungen (11, 12) das Druckmesssignal analysieren und fähig sind, ein Leckvorhandenseinssignal im Fall des Vorhandenseins einer Spitze (C) in der Entwicklung des vom Gasdruckmesser (10) gelieferten Druckmesssignals zu erzeugen, die aus einer Änderung des Wärmekoeffizienten der im zu testenden Bauteil vorhandenen Gasmischung resultiert.

2. Leckerfassungsvorrichtung nach Anspruch 1, wobei
- das gespeicherte Programm eine Anfangsfolge der Leckerfassung bei Hochdruck enthält, die das Primärpumpsystem (5) und den Gasdruckmesser (10) verwendet, um im Fall einer abrupten Schwankung des vom Gasdruckmesser (10) gelieferten Druckmesssignals ein Leckvorhandenseinssignal zu erzeugen,
- in Abwesenheit einer Leckerfassung in der Anfangsfolge das gespeicherte Programm die Erfassung durch eine spätere Leckerfassungsfolge fortsetzt, während der die mehrstufige Sekundärpumpe (6) den Aufbau des Vakuums im zu testenden Bauteil (1) fortsetzt, und während der die Suche nach Lecks vom Gasanalysator (8) gewährleistet wird.

3. Leckerfassungsvorrichtung nach einem der Ansprüche 1 oder 2, wobei die Signalverarbeitungseinrichtungen (11) durchgehend die Ableitung des vom Gasdruckmesser (10) gelieferten Druckmesssignals analysieren.

4. Leckerfassungsvorrichtung nach Anspruch 3, wobei die Signalverarbeitungseinrichtungen (11) durchgehend das Vorzeichen der Ableitung des vom Gasdruckmesser (10) gelieferten gefilterten Druckmesssignals analysieren und ein Leckvorhandenseinssignal senden, wenn dieses Vorzeichen sich umkehrt.

5. Leckerfassungsvorrichtung nach einem der Ansprüche 1 oder 2, wobei die Signalverarbeitungseinrichtungen (11) das vom Gasdruckmesser (10) gelieferte Druckmesssignal mit Eichkurven vergleichen, die vorher in einer Speichereinrichtung gespeichert wurden, und ein Leckvorhandenseinssignal senden, wenn das Druckmesssignal sich signifikant von den Eichkurven unterscheidet.

6. Leckerfassungsvorrichtung nach einem der Ansprüche 1 bis 5, wobei der Gasanalysator (8) ein Massenspektrometer oder ein Quadrupol ist.

7. Leckerfassungsvorrichtung nach einem der vorhergehenden Ansprüche, die außerdem mindestens einen mit der Hauptleitung (4) verbundenen Leckgasvorhandenseinssensor (15) aufweist, der fähig ist, das Leckgas auf einem Druck nahe dem Atmosphärendruck zu erkennen und ein Gasvorhandenseinssignal erzeugt, das an die Signalverarbeitungseinrichtungen (11) gesendet wird.

8. Leckerfassungsvorrichtung nach einem der vorhergehenden Ansprüche, die außerdem eine direkte Eingangsleitung (9') enthält, die mit einer Eingangsstrom-Kontrolleinrichtung (9") versehen und fähig ist, das zu testende Bauteil (1) mit dem Sekundärsaugzugang (9) der mehrstufigen Sekundärpumpe (6) oder mit dem Testgasanalysator (8) zu verbinden.

9. Verfahren zur Leckerfassung in einem zu testenden Bauteil (1), wobei:
- die Innenatmosphäre eines zu testenden Bauteils (1) gegenüber der Außenatmosphäre unter Unterdruck gesetzt wird, und der Wärmetauschkoeffizient der in der Innenatmosphäre des zu testenden Bauteils (1) vorhandenen Gasmischung überwacht wird,
- zu einem gegebenen Zeitpunkt die Außenseite des zu testenden Bauteils (1) mit einem Testgas besprüht wird,
- das Vorhandensein einer signifikanten abrupten Schwankung des Wärmetauschkoeffizienten der Gasmischung kurz nach dem Besprühungszeitpunkt gesucht wird, wobei dieses Vorhandensein das Anzeichen der Existenz eines Lecks ist,
- in Abwesenheit einer Leckerfassung der Aufbau des Vakuums im zu testenden Bauteil (1) fortgesetzt und eine Leckerfassung im Gegenstrom durch einen Gasanalysator (8) durchgeführt wird.

## Claims

1. Leak detection device (2) comprising:
- a primary pumping system (5) designed to deliver at atmospheric pressure and having a primary suction intake,
- a main pipe (4), having a connection inlet designed to be connected to a piece to be tested (1), and having a connection outlet connected to the suction intake of the primary pumping system (5),
- a multistage secondary pump (6) having a main intake, having a delivery connected to the primary suction intake, and having at least one intermediate suction intake connected to the main pipe (4) by an intermediate pipe (6b),
- a gas analyser, (8) connected to the main intake of the multistage secondary pump (6) for detecting the presence of a leakage gas returning countercurrent wise through the multistage secondary pump (6),
- a gas pressure gauge (10), sensitive to the heat exchange coefficients of the gases, connected to the main pipe (4) and producing a pressure measurement signal,
- signal processing and control means (11, 12) receiving the pressure measurement signal delivered by the gas pressure gauge (10), containing a recorded programme, and able to compare the pressure measurement signal against a determined pressure threshold in order to generate a signal for connection of the gas analyser (8) when the measured pressure is below the said pressure threshold,
**characterized in that** the signal processing and control means (11, 12) are also able to perform an initial high pressure leak detection sequence using the primary pumping system (5) and the gas pressure gauge (10) and during which the signal processing and control means (11, 12) analyse the pressure measurement signal and are able to produce a signal indicative of the presence of leaks if there is a peak(C) in the evolution of the pressure measurement signal delivered by the gas pressure gauge (10) resulting from a change of the thermal coefficient of the mixture of gas present in the piece to be tested.

2. Leak detection device according to Claim 1, in which
- the recorded programme contains an initial high pressure leak detection sequence using the primary pumping system (5) and the gas pressure gauge (10) to generate a signal indicative of the presence of leaks if there is a sudden variation in the pressure measurement signal delivered by the gas pressure gauge (10),
- if leaks are not detected during the initial sequence, the recorded programme continues with the detection using a subsequent leak detection sequence during which the multistage secondary pump (6) continues to establish the vacuum in the piece to be tested (1), and during which the search for leaks is performed by the gas analyser (8).

3. Leak detection device according to one of Claims 1 and 2, in which the signal processing means (11) continuously analyse the derivative of the pressure measurement signal delivered by the gas pressure gauge (10).

4. Leak detection device according to Claim 3, in which the signal processing means (11) continuously analyse the sign of the derivative of the filtered pressure measurement signal delivered by the gas pressure gauge (10) and emit a signal indicative of the presence of leaks if this sign changes.

5. Leak detection device according to one of Claims 1 and 2, in which the signal processing means (11) compare the pressure measurement signal delivered by the gas pressure gauge (10) with calibration curves already recorded in a storage means and emit a signal indicative of the presence of leaks if the pressure measurement signal differs significantly from the calibration curves.

6. Leak detection device according to any one of Claims 1 to 5, in which the gas analyser (8) is a mass spectrometer or a quadrupole.

7. Leak detection device according to one of the preceding claims, further comprising at least one leakage gas presence sensor (15) connected to the main pipe (4), able to detect the leakage gas at a pressure close to atmospheric pressure, and producing a signal indicative of the presence of gas which is sent to the signal processing means (11).

8. Leak detection device according to one of the preceding claims, further comprising a direct inlet pipe (9') equipped with an inlet flow control means (9") and able to connect the piece to be tested (1) to the secondary suction inlet (9) of the multistage secondary pump (6) or to the test gas analyser (8).

9. Method for detecting leaks in a piece to be tested (1), in which:
- the interior atmosphere of a piece to be tested (1) is placed at a reduced pressure with respect to the external atmosphere and the heat exchange coefficient of the gaseous mixture present in the said interior atmosphere of the piece to be tested (1) is monitored,
- at a given instant, the outside of the piece to be tested (1) is sprayed with a test gas,
- the presence of a significant sudden variation in the heat exchange coefficient of the gaseous mixture shortly after the instant of spraying is searched for, this presence being the sign that there is a leak,
- if a leak is not detected, the vacuum continues to be established in the piece to be tested (1) and leaks are detected countercurrent wise using a gas analyser (8).
